(19) Europäisches Patentamt
European Patent Office
Office européen des brevets

(11) **EP 2 876 509 B1**

(12) **EUROPÄISCHE PATENTSCHRIFT**

(45) Veröffentlichungstag und Bekanntmachung des Hinweises auf die Patenterteilung:
**18.07.2018 Patentblatt 2018/29**

(21) Anmeldenummer: **14191935.7**

(22) Anmeldetag: **05.11.2014**

(51) Int Cl.:
*G05B 9/02* (2006.01)     *G05B 23/02* (2006.01)
*H02H 3/32* (2006.01)

(54) **Sicherheitssteuerung**

Safety control

Commande de sécurité

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.11.2013 DE 102013112815**

(43) Veröffentlichungstag der Anmeldung:
**27.05.2015 Patentblatt 2015/22**

(73) Patentinhaber: **Wieland Electric GmbH 96052 Bamberg (DE)**

(72) Erfinder: **Bilz, Falko 14612 Falkensee (DE)**

(74) Vertreter: **2K Patentanwälte Blasberg Kewitz & Reichel Partnerschaft mbB Schumannstrasse 27 60325 Frankfurt am Main (DE)**

(56) Entgegenhaltungen:
**EP-A2- 2 107 662      DE-A1- 19 962 497
DE-A1-102004 045 435   DE-A1-102011 117 615
DE-T2- 69 905 751      US-A1- 2013 128 396**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 876 509 B1

**Beschreibung**

Die Erfindung betrifft eine Sicherheitssteuerung, ausgelegt zum gemäß einer Sicherheitsvorschrift sicheren Ein- und Ausschalten eines elektrischen Verbrauchers, umfassend ein sicheres Schaltelement sowie einen ersten und einen zweiten Ausgang, an die der elektrische Verbraucher unter Bildung eines mittels des Schaltelements sicher schaltbaren Versorgungsstromkreises für den elektrischen Verbraucher anschließbar ist. Die Erfindung betrifft weiter ein Verfahren zum Prüfen eines Versorgungsstromkreises auf Querschlüsse, durch die die Stromversorgung des Verbrauchers trotz Abschalten über den Querschluss aufrecht erhalten wird, in einer Sicherheitssteuerung, ausgelegt zum gemäß einer Sicherheitsvorschrift sicheren Ein- und Ausschalten eines elektrischen Verbrauchers, umfassend ein sicheres Schaltelement sowie einen ersten und einen zweiten Ausgang, an die der elektrische Verbraucher unter Bildung des mittels des Schaltelements sicher schaltbaren Versorgungsstromkreises für den elektrischen Verbraucher anschließbar ist.

Sicherheitssteuerungen werden vor allem im industriellen Bereich verwendet, um elektrische Verbraucher sicher ein- und auszuschalten, die Gefahrenpotential für Mensch und Material bergen. Derartige elektrische Verbraucher sind z.B. Pressen, Fräswerkzeuge etc. Hierzu wird die Stromversorgung für den oder die elektrischen Verbraucher über mindestens zwei Ausgänge der Sicherheitssteuerung gesteuert, an die der jeweilige Verbraucher über einen Aktor (z.B. Schütze, Ventile etc.) unter Bildung eines Versorgungsstromkreises angeschlossen wird. Sobald die Sicherheitssteuerung die den Versorgungsstromkreis unterbricht, wird der Verbraucher in einen sicheren Zustand überführt, d.h. üblicherweise ausgeschaltet.

Sicherheitssteuerungen weisen weiterhin üblicherweise eine Anzahl von Schalteingängen und -ausgängen zum Anschluss der Arbeitskontakte eines Sicherheitsschaltelements auf. Das Sicherheitsschaltelement kann z.B. ein Not-Aus-Schalter sein, eine Positions- oder Stellungsüberwachung z.B. einer Schutztür, eine Lichtschranke, eine Schaltmatte etc. Das Sicherheitsschaltelement hat dabei üblicherweise eine je nach Anwendung zu bestimmende Stellung "sicher", z.B. Lichtschranke nicht unterbrochen, d.h. keine Person im Gefahrenbereich, und eine Stellung "nicht sicher", z.B. Schutztürposition offen, d.h. Gefahr. Typischerweise soll der Versorgungsstromkreis des elektrischen Verbrauchers dann unterbrochen werden, wenn das Sicherheitsschaltelement nicht mehr in der Position "sicher" ist.

Sicheres Ein- und Ausschalten bezüglich des Versorgungsstromkreises bedeutet in diesem Zusammenhang, dass die Sicherheitssteuerung zur Erfüllung der einschlägigen Sicherheitsvorschriften und -zertifizierungen, wie beispielsweise der EN 61508 oder der EN 954-1 ausgelegt ist. Die Erfüllung der jeweiligen Norm bzw. einer in der Norm definierten Sicherheitsstufe wird in den Normen durch Parameter für die Zuverlässigkeit der Sicherheitsfunktion von Geräten definiert. Beispielsweise werden in der EN 61508 die Berechnungsgrundlagen für PFH (probability of dangerous failure per hour - Wahrscheinlichkeit des Versagens pro Stunde) und PFD (probability of dangerous failure on demand - Wahrscheinlichkeit eines Versagens bei Anforderung) geliefert. Aus diesen Parametern lässt sich die Sicherheitsstufe SIL ablesen. Des Weiteren wird in der EN 61508 die SFF (Safe Failure Fraction) eingeführt, ein Maß dafür, welcher Anteil aller denkbaren Fehler in die sichere Richtung geht.

Entsprechende Sicherheitssteuerungen und entsprechende Verfahren sind dem Fachmann beispielsweise aus der DE 10 2011 117 615 A1 oder der DE 199 62 497 A1 bekannt. Zur Erreichung der genannten Sicherheitsstufen sind die internen Schaltkreise der Sicherheitssteuerung typischerweise redundant ausgestaltet. Die Schaltelemente zum Ein- und Ausschalten des Versorgungsstromkreises des elektrischen Verbrauchers umfassen dazu typischerweise zwei in Reihe geschaltete Schalter, die von getrennten Stromkreisen gesteuert werden. Weiterhin umfasst eine Sicherheitssteuerung typischerweise ein Auswertesystem, das eine umfangreiche permanente Selbstkontrolle der Sicherheitssteuerung durchführt, insbesondere auf Querschlüsse, d.h. unbeabsichtigte Verbindungen der Strompfade nach Plus oder Masse oder von Ausgängen untereinander, die die Gefahr bergen, dass die Stromversorgung des Verbrauchers trotz Abschalten über den Querschluss aufrecht erhalten wird.

Zur Erreichung hoher Sicherheitsstufen wird dabei von der Sicherheitssteuerung verlangt, dass auch Querschlüsse in der externen Verkabelung zum Verbraucher erkannt werden. Üblicherweise wird dazu jeder Ausgangskreis mit Austastlücken beaufschlagt, auch bekannt als Testpulse. Sind mehrere Verbraucher an jeweils separaten Ausgängen der Sicherheitssteuerung angeschlossen, werden die Austastlücken an den Ausgängen zeitlich versetzt. Hierdurch können auch Querschlüsse zwischen den einzelnen Ausgangskreisen erkannt werden.

Hierbei ergibt sich jedoch das Problem, dass derartige Testpulse für bestimmte Anwendungen ungeeignet sind, da diese bei großen Leitungslängen zu unerwünschten elektromagnetischen Abstrahlungen führen. Auch reagieren einige Aktoren, z.B. Frequenzumsetzer, auf diese Testpulse mit einem unerwünschten Verhalten.

Es ist daher Aufgabe der Erfindung, eine Sicherheitssteuerung sowie ein Verfahren zum Prüfen eines Versorgungsstromkreises auf Querschlüsse in einer Sicherheitssteuerung anzugeben, die eine zuverlässige Prüfung der Ausgangskreise unter Verzicht auf die herkömmlichen Austastlücken ermöglicht. Diese Aufgabe wird bezüglich der Sicherheitssteuerung erfindungsgemäß durch ein Auswertesystem zur Prüfung des Versorgungsstromkreises auf Querschlüsse, durch die die Stromversorgung des Verbrauchers trotz Abschalten über den Querschluss aufrecht erhalten wird, gelöst, wobei das Auswertesystem eine erste dem ersten Ausgang zugeordneten Strommesseinrichtung und eine zweite, dem zweiten Ausgang zugeordnete Strommesseinrichtung umfasst und wobei in dem Auswertesystem eine die in den Strommesseinrichtungen gemessenen Ströme verknüpfende Bedingung für die Erkennung eines durch einen Querschluss erzeugten Stromflusses, der von dem Stromkreis zu- oder wegfließt, hinterlegt ist.

Bezüglich des Verfahrens wird die Aufgabe dadurch gelöst, dass ein Auswertesystem den am ersten Ausgang fließenden Strom und den am zweiten Ausgang fließenden Strom misst und anhand einer die gemessenen Ströme verknüpfenden Bedingung ein durch einen Querschluss erzeugter Stromfluss, der von dem Stromkreis zu- oder wegfließt, erkannt wird.

Die Erfindung geht dabei von der Überlegung aus, dass ein Querschluss einen Stromfluss erzeugt, der von dem betroffenen Stromkreis zu- oder wegfließt. Da elektrische Ladung erhalten bleibt, muss also bei einem intakten Ausgangskreis die Stromstärke des zufließenden Stroms der des wegfließenden entsprechen. Liegt ein Querschluss vor, wird zusätzlicher Strom eingespeist oder fließt ab, was an der Differenz der Ein- und Austrittsströme erkennbar wird. Daher wird eine dem ersten Ausgang des Ausgangskreises und eine dem zweiten Ausgang des Ausgangskreises zugeordnete Strommesseinrichtung vorgesehen, die den Strom am ersten und zweiten Ausgang misst. Im Auswertesystem ist eine Bedingung hinterlegt, die die beiden gemessenen Ströme verknüpft, vorteilhafterweise könnte eine Bedingung hinterlegt sein, dass der Eingangsstrom nicht mehr als 1/10 seines Wertes vom Ausgangsstrom abweichen darf. Wird dieser Grenzwert überschritten und die Bedingung nicht mehr erfüllt, wird durch das Auswertesystem ein Querschluss erkannt und angezeigt. Dieser führt dann z.B. zur sicherheitsgerichteten Abschaltung.

In vorteilhafter Ausgestaltung der Sicherheitsschalteinrichtung ist das sichere Schaltelement in dem zu demjenigen Ausgang führenden Schaltkreis angeordnet, der einem höheren Potential zugeordnet ist als der jeweils andere Ausgang. Eine derartige Schaltung wird als High-Side-Schaltung bezeichnet, d.h. das Schaltelement ist zwischen dem höheren Potential und dem Verbraucher angeordnet.

In alternativer vorteilhafter Ausgestaltung der Sicherheitsschalteinrichtung ist das sichere Schaltelement in dem zu demjenigen Ausgang führenden Schaltkreis angeordnet, der einem niedrigeren Potential zugeordnet ist als der jeweils andere Ausgang. Eine derartige Schaltung wird als Low-Side-Schaltung bezeichnet, d.h. das Schaltelement ist zwischen dem Verbraucher und der Masseleitung angeordnet. Die beschriebene Erkennung von Querschlüssen über Stromstärkeunterschiede ist sowohl für High-Side- also auch für Low-Side-Schaltungen anwendbar.

Häufig soll neben der Erkennung von Querschlüssen auch die Funktion der Schaltelemente und der in ihnen verwendeten Schalter regelmäßig geprüft werden. Hierzu ist ein kurzes Öffnen der Schalter erforderlich, was jedoch einen Puls erzeugt, der gemäß der eingangs genannten Aufgabe ja gerade vermieden werden soll. Zur Vermeidung des entstehenden Pulses am jeweiligen Ausgang ist in der Sicherheitssteuerung vorteilhafterweise dem ersten Strompfad mit dem sicheren Schaltelement ein zweiter Strompfad mit einem zweiten sicheren Schaltelement parallel geschaltet. Wird ein Schalter des Schaltelements auf einer Seite geöffnet, bleibt der Stromfluss auf dem anderen Pfad bestehen, so dass kein Impuls am Ausgang anliegt. Zur Funktionsprüfung des Schalters weist das Auswertesystem vorteilhafterweise für jeden der beiden Strompfade eine dem jeweiligen Strompfad zugeordnete Strommesseinrichtung auf.

Verfahrensmäßig misst das Auswertesystem dann vorteilhafterweise den am ersten Ausgang fließenden Strom oder den am zweiten Ausgang fließenden Strom sowie den im ersten Strompfad und den im zweiten Strompfad fließenden Strom und es wird anhand einer die gemessenen Ströme verknüpfenden Bedingung eine Fehlfunktion eines der sicheren Schaltelemente erkannt. Wird beispielsweise im ersten Strompfad ein Schalter geöffnet, sollte in diesem Strompfad kein Strom mehr fließen, während der Strom im anderen Strompfad dem am Ausgang entsprechen müsste, sofern kein Querschluss vorliegt. Somit kann ohne Austastpulse an den Ausgängen sowohl die Funktion der Schalter überprüft werden, als auch eine Prüfung auf Querschlüsse erfolgen.

Nachteilig bei der genannten Prüfung auf Querschlüsse mittels Stromstärken ist jedoch, dass in jedem Fall ein Strom fließen muss, um die Prüfung durchführen zu können. Ist kein Verbraucher an die Sicherheitssteuerung angeschlossen bzw. der Stromkreis innerhalb des Verbrauchers noch unterbrochen, obwohl dieser angeschlossen ist, ist der Stromkreis nicht geschlossen und eine interne Prüfung der Sicherheitssteuerung auf Fehler kann nicht erfolgen. Zur Abhilfe weist die Sicherheitssteuerung vorteilhafterweise einen Strompfad mit einem Schalter auf, der den ersten und den zweiten Ausgang verbindet, d.h. bedarfsweise kurzschließt. Verfahrensmäßig werden also vorteilhafterweise der erste und der zweite Ausgang über einen Strompfad in der Sicherheitssteuerung verbunden, wenn der Versorgungsstromkreis für den elektrischen Verbraucher nicht geschlossen ist. Die Verbindung muss nicht direkt sein, sondern kann beispielsweise auch vorgesehene Ausgangstreiber umgehen, relevant ist lediglich, dass ein interner Schluss zur Bildung eines Stromkreises erfolgt. Die Verbindung kann dauerhaft, kurzfristig während einer händisch oder automatisch veranlassten Prüfung oder aber zyklisch während regelmäßiger Prüfzyklen erfolgen. Hierdurch wird auch ohne geschlossenen Stromkreis zum Verbraucher ein interner Stromkreis hergestellt, der die genannte Prüfung auf Querschlüsse und auf Funktionalität der Schalter mittels Strommessung ermöglicht.

In vorteilhafter Ausgestaltung umfasst die jeweilige Strommesseinrichtung ein Hall-Element. Eine derartige Strommesseinrichtung basiert auf dem Hall-Effekt, der beschreibt, dass eine elektrische Spannung in einem stromdurchflossenen Leiter auftritt, der sich in einem stationären Magnetfeld befindet. Dies kann zur Messung des Stromes verwendet werden, da die Spannung proportional zur Stromstärke ist. Hall-Elemente weisen einen geringen Serienwiderstand und somit eine geringe Eigenerwärmung auf.

In alternativer oder zusätzlicher vorteilhafter Ausgestaltung umfasst die jeweilige Strommesseinrichtung einen Shunt-Widerstand mit einem Spannungsverstärker. Der Shunt-Widerstand wird dazu in die Leitung mit dem zu messenden Strom eingebaut. Die an diesem Widerstand abfallende kleine Spannung ist proportional zur Stromstärke und wird gemessen. Die Verwendung eines Operationsverstärkers ermöglicht es, einen besonders kleinen Widerstand zur Strommessung zu verwenden, der die Schaltung in der Sicherheitssteuerung nur geringfügig beeinflusst.

In weiterer vorteilhafter Ausgestaltung ist das jeweilige sichere Schaltelement monostabil ausgelegt. Dies bedeutet, dass nur der hochohmige Zustand der Schalter des Schaltelements stabil ist, während der niederohmige Zustand durch ein bestimmtes externes Signal, d.h. z.B. eine von Mikrocontrollern erzeugte Taktung aufrechterhalten werden muss. Bleibt das Signal aus, geht der Schalter in den hochohmigen Zustand. Hierdurch wird eine weiter erhöhte Fehlersicherheit der Sicherheitssteuerung erreicht.

In weiterer vorteilhafter Ausgestaltung ist den Ausgängen jeweils eine Spannungsmesseinrichtung zugeordnet. Verfahrensmäßig misst das Auswertesystem vorteilhafterweise die an den Ausgängen jeweils anliegenden Spannungen und anhand einer die gemessenen Spannungen verknüpfenden Bedingung wird ein Querschluss erkannt. Hierdurch wird es bei mehreren Ausgangskreisen für mehrere Verbraucher auch möglich, Querschlüsse von Ausgangskreisen untereinander festzustellen. Wird ein solcher Querschluss von Ausgangskreisen festgestellt, wird z.B. durch Abschaltung der Schaltelemente einer gefahrbringenden Situation vorgebeugt.

In zusätzlicher oder alternativer vorteilhafter Ausgestaltung wird ein Querschluss weiterhin anhand einer die gemessenen Ströme mit vorab ermittelten typischen Betriebswerten für die Ströme verknüpfenden Bedingung erkannt. Mit anderen Worten: Zusätzlich werden typische Werte für die durch die Strommesseinrichtungen fließenden Ströme vorab angelernt. Ein derartiges Anlernen ist gegenüber vorgegebenen, fest hinterlegten Werten vorteilhaft, da die Stromstärke abhängig vom jeweils an den Ausgängen angeschlossenen Aktor ist. Aus diesen typischen Betriebswerten werden Grenzwerte errechnet, z.B. Grenzen von 1/10 des jeweils typischen Stromstärkewertes. Im Betrieb werden die gemessenen Ströme auf diese Grenzwerte bezüglich der jeweils eingeschalteten Aktoren geprüft. Damit werden Querschlüsse von Ausgangskreisen untereinander erkannt und es wird bei Erkennen eines Querschlusses z.B. durch Abschaltung der Schaltelemente einer gefahrbringenden Situation vorgebeugt.

In noch weiterer Ausgestaltung des Verfahrens wird anhand einer die gemessenen Stromstärken mit vorab ermittelten typischen Betriebswerten für die Stromstärken jedes der angeschlossenen elektrischen Verbraucher verknüpfenden Bedingung eine Fehlfunktion eines elektrischen Verbrauchers erkannt. Das heißt, dass für jeden der Verbraucher die Stromaufnahme bestimmt wird. Sofern die Stromaufnahmen unterschiedlich sind, kann bei einem Abfall der Stromstärke um einen Wert, der ungefähr einer vorab bestimmten Stromstärke eines der Verbraucher entspricht, darauf geschlossen werden, dass in diesem Verbraucher eine Fehlfunktion vorliegt.

Eine Sicherheitssteuerung weist vorteilhafterweise Mittel zum Prüfen eines Versorgungsstromkreises auf Querschlüsse mit dem beschriebenen Verfahren auf, insbesondere entsprechende Strom- und Spannungsmesseinrichtungen und ein entsprechend ausgelegtes Auswertesystem.

Die mit der Erfindung erzielten Vorteile bestehen insbesondere darin, dass durch die Stromvergleichsmessung an den Ausgängen einer Sicherheitssteuerung die dynamische Prüfung der Verkabelung ohne Verwendung von Austastlücken realisiert wird. Dies ist ein Vorteil, da z.B. Frequenzumrichter, die empfindlich auf diese Lücken (im Allgemeinen mit Abschaltung) reagieren, unter Beibehaltung einer hohen Sicherheitsanforderungsstufe sowie einer hohen Sicherheitskategorie betrieben werden können. Zudem entfallen die Schaltflanken auf den Aktor-Zuleitungen, was bei höheren Strömen und/oder langen Zuleitungen EMV-Vorteile mit sich bringt.

Die Erfindung wird anhand einer Zeichnung näher erläutert. Darin zeigen:

FIG 1 eine schematische Darstellung einer Sicherheitssteuerung,

FIG 2 ein Schaltbild einer ausgangsseitigen Schaltung der Sicherheitssteuerung mit High-Side-Schaltung

FIG 3 ein Schaltbild eines monostabilen Schalters in der High-Side-Schaltung,

FIG 4 ein Schaltbild einer ausgangsseitigen Schaltung der Sicherheitssteuerung mit Low-Side-Schaltung und

FIG 5 ein Schaltbild eines monostabilen Schalters in der Low-Side-Schaltung.

Gleiche Teile sind in allen Figuren mit denselben Bezugszeichen versehen.

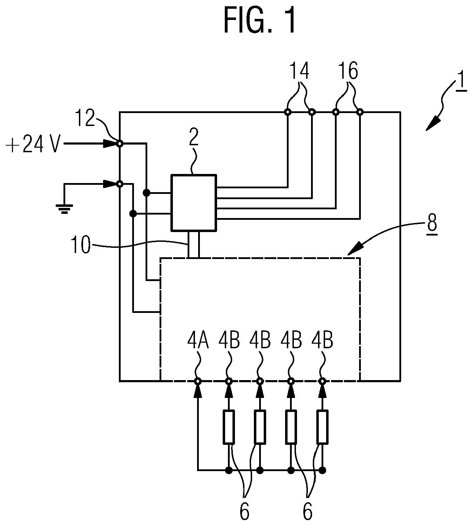

Die FIG 1 zeigt eine Sicherheitssteuerung 1 mit einer zentralen Steuereinheit 2. Die Steuereinheit 2 ist im Ausführungsbeispiel als Mikrocontroller ausgestaltet. Die Sicherheitssteuerung 1 hat fünf Ausgänge 4, die in die Stromzufuhr zu vier nicht näher gezeigten elektrischen Verbrauchern eingeschaltet sind, die Gefahrenpotential aufweisen und daher sicher ausgeschaltet werden sollen. Einer der Ausgänge 4A liegt dabei auf einem anderem Potential als die anderen vier Ausgänge 4B, so dass eine Verbindung von einem der vier Ausgänge 4B mit dem einen Ausgang 4A einen Stromkreis ergibt, so dass vier separate Stromkreise zu den als Lastwiderstände dargestellten Aktoren 6 des jeweiligen Verbrauchers gebildet werden. Die Aktoren 6 können beispielsweise Ventile, Schütze etc. sein.

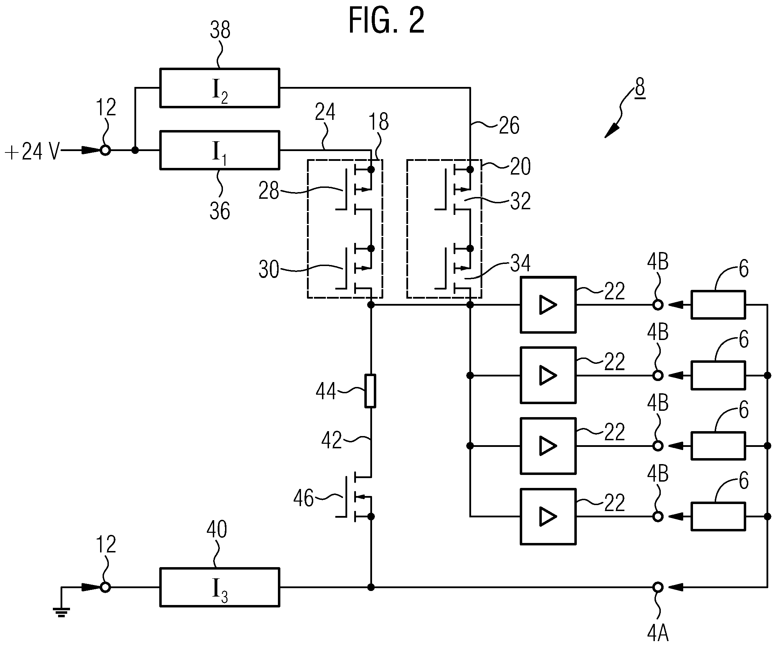

Die Ausgänge 4 sind Teil eines Ausgangsstromkreises 8, der in den folgenden FIG 2-5 noch detailliert erläutert wird. Der Ausgangsstromkreis wird über vier separate, redundante Strompfade 10 von der Steuereinheit 2 angesteuert. Die Stromversorgung der Steuereinheit 2 und des Ausgangsstromkreises 8 erfolgt über Versorgungsanschlüsse 12 für +24 V Spannung und Erdung.

Um die Funktion der elektrischen Verbraucher im Gefahrenfall zu unterbrechen oder zumindest zu beeinflussen, sind verschiedene nicht in der FIG 1 gezeigte Sicherheitsschaltelemente an die Sicherheitssteuerung 1 anschließbar. Diese können z.B. Not-Aus-Schalter, Lichtschranken, Türpositionsschalter etc. sein. Zum Anschluss dieser Sicherheitsschaltelemente weist das Sicherheitssteuerung zwei Schaltausgänge 14 und zwei Schalteingänge 16 auf. An den Schaltausgängen 16 kann entweder eine positive Gleichspannung oder Prüfsignale mit zyklischen, pulsartigen Prüfpulsen zur Leitungs- und Kurzschlussprüfung anliegen, die jeweils für eine kurze Dauer 0 Volt über der sonst erhaltenen Grundspannung einstellen. Die Prüfpulse können alternativ auch auf einen Trigger wie z.B. eine manuelle oder automatische veranlasste Prüfanfrage hin abgegeben werden. Das Signal der Schaltausgänge 14 durchläuft das Sicherheitsschaltelement und wird an den Schalteingängen 16 wieder aufgenommen und ausgewertet.

Hinsichtlich der Schaltein- und ausgänge 14, 16 kann - z.B. bei einer modularen Ausgestaltung der Sicherheitssteuerung 1 - eine beliebige Komplexität mit einer Vielzahl von unterschiedlichen Sicherheitsschaltelementen und separaten Schaltkreisen erreicht werden. Der Einfachheit halber ist eine einfach gehaltene Ausführungsform mit nur zwei Schaltein- und ausgängen 14, 16 gezeigt.

FIG 2 zeigt im Detail den Ausgangsstromkreis 8 der Sicherheitssteuerung 1. Dieser wird wie bereits in FIG 1 gezeigt von den Versorgungsanschlüssen 12 mit +24 V Gleichspannung und Masse versorgt, so dass ein geschlossener Stromkreis gebildet werden kann. Der Ausgang 4A ist über einen Strompfad mit Masse verbunden. Jedem der Ausgänge 4B ist ein separater Ausgangstreiber 22 vorgeschaltet. Die Ausgangstreiber 22 stellen einen Temperatur- und Überspannungsschutz zur Verfügung. Die Eingänge der Ausgangstreiber 22 sind verbunden und über sichere Schaltelemente 18, 20 mit der Versorgungsspannung +24 V verbunden. Der Ausgangsstromkreis 8 ist also als High-Side-Schaltung ausgelegt.

Die genannte Verbindung der Ausgangstreiber 22 zur Versorgungsspannung +24 V erfolgt dabei über einen ersten und einen zweiten Strompfad 24, 26. Die Strompfade 24, 26 sind parallel zueinander und verbinden die Versorgungsspannung mit den Ausgangstreibern 22, wobei in jeden der Strompfade je ein sicheres Schaltelement 18, 20 geschaltet ist. Jedes sichere Schaltelement umfasst zwei Schalter 28, 30, 32, 34, die im Ausführungsbeispiel als Metall-Oxid-Halbleiter-Feldeffekttransistoren (MOSFETs) ausgestaltet sind. Die Schalter 28, 30 sind redundant zueinander und müssen beide geschlossen werden, damit der Strompfad 24 niederohmig wird, ebenso sind die Schalter 32, 34 redundant zueinander und müssen beide geschlossen werden, damit der Strompfad 26 niederohmig wird. Die Schalter 28, 32 in jedem Schaltelement 18, 20 und die Schalter 30, 34 in jedem Schaltelement 18, 20 werden von je einem der Strompfade 10 der Steuereinheit 2 derart angesteuert, dass einer der Strompfade 24, 26 im Betriebszustand stets geschlossen bleibt. Diese Redundanz garantiert die Sicherheit der Schaltelemente 18, 20.

Weiterhin ist der Ausgangsstromkreis 8 mit mehreren Strommesseinrichtungen 36, 38, 40 ausgestattet, die derart angeordnet sind, dass die Stromstärke des gesamten Stroms in den Strompfaden zu den Ausgängen 4B und dem Ausgang 4A separat gemessen werden kann. Hierfür ist jeweils eine Strommesseinrichtung 36, 38 für die Stromstärken I1 und I2 in den parallelen Strompfaden 24 bzw. 26 der parallelen Schaltelemente 18, 20 angeordnet und eine weitere Strommesseinrichtung 40 für die Stromstärke I3 in dem Strompfad vom Ausgang 4A. Der zu und von den Aktoren 6 fließende Strom kann also bestimmt werden. Die Strommesseinrichtungen 36, 38, 40 sind dabei entweder als Hall-Elemente oder als, bevorzugt kleine, Shunt-Widerstände mit entsprechenden Operationsverstärkern ausgestaltet. Sie sind mit einem nicht näher dargestellten Auswertesystem in der Steuereinheit 2 verbunden.

Die beiden parallelen, separat schaltbaren Strompfade 24, 26 in Kombination mit den Strommesseinrichtungen 36, 38, 40 ermöglichen nun eine umfassende Funktionsprüfung der externen Verkabelung der Aktoren 6 auf Querschlüsse, ohne dass dazu ein kurzzeitiges Ausschalten der Zuleitungen nötig wäre. Die Querschlüsse können in verschiedenen Ausprägungen vorkommen: Zum Einen können Querschlüsse zwischen einzelnen Leitungen entstehen, zum Anderen können Querschlüsse einer Leitung zu Masse oder Versorgungsspannung auftreten (sogenannte Stuck-at-Low- oder Stuck-at-High-Fehler).

Die genannten Stuck-at-Fehler verursachen nämlich einen Abfluss von Strom aus der quergeschlossenen Leitung. Bei einem Stuck-at-Fehler wird daher der zu den Ausgängen 4B fließende Strom nicht mehr dem vom Ausgang 4A fließenden Strom entsprechen. Im Auswertesystem ist eine entsprechende Bedingung hinterlegt, die einen Querschluss anzeigt. Im Ausführungsbeispiel ist dies

$$|I1+I2-I3| > I3/10.$$

Sobald also der Unterschied der Summe der eingehenden Stromstärken I1, I2 über die parallelen Strompfade 24, 26 zur ausgehenden Stromstärke I3 größer wird als ein Zehntel des Absolutwertes der ausgehenden Stromstärke I3, muss ein Abfluss zu Masse oder Zufluss positiver Versorgungsspannung im Stromkreis vorliegen; es liegt also ein Stuck-at-Fehler vor. Dies meldet das Auswertesystem an die Steuereinheit 2, die die weiteren voreingestellten Schritte veranlasst, in der Regel die sicherheitsgerichtete Abschaltung der Schalter 22, 28, 30, 32, 34.

Die oben beschriebene Erkennung von Stuck-at-Fehlern auf den Ausgangsleitungen erfolgt ohne die Notwendigkeit von Austastlücken in der Versorgungsspannung. Ebenso kann mit der beschriebenen Schaltung des Ausgangsstromkreises 8 im Ausführungsbeispiel die Funktion der Schalter 28, 30, 32, 34 dynamisch geprüft werden, ohne dass Austastlücken erkennbar sind. Diese Prüfung wird ebenfalls durch die Steuereinheit 2 mit dem integrierten Auswertesystem durchgeführt:

Standardmäßig werden alle vier Schalter 28, 30, 32, 34 im Durchlass betrieben. Die Steuereinheit 2 veranlasst, dass periodisch und einzeln nacheinander die Schalter 28, 30, 32, 34 jeweils für einige Millisekunden geöffnet werden. Mit den Strommesseinrichtungen 36, 38, 40 ist damit jeder einzelne Schalter 28, 30, 32, 34 testbar: Wird nämlich Schalter 28 oder 30 geöffnet, muss innerhalb kurzer Zeit I1=I3 und I2=0 gelten, da der gesamte Strom über den Strompfad 26 läuft. Umgekehrt muss, wenn Schalter 32 oder 34 geöffnet wird, innerhalb kurzer Zeit I2=I3 und I1=0 gelten, da der gesamte Strom über den Strompfad 24 läuft. Entsprechende Bedingungen, gegebenenfalls wieder mit entsprechenden Toleranzbereichen von z.B. 10% sind im Auswertesystem hinterlegt. Abweichungen lassen auf eine Fehlfunktion der Schalter 28, 30, 32, 34 schließen und werden in der Steuereinheit 2 entsprechend verarbeitet.

Austastlücken oder Testpulse durch das Testen der Schalter 28, 30, 32, 34 sind an den Ausgängen (4A, 4B) ebenfalls nicht erkennbar, sofern die MOSFETs derart gewählt sind, dass deren Widerstand im eingeschalteten Zustand (RDS(on)) klein ist zum Serienwiderstand der übrigen Schaltung und der äußeren Verkabelung.

Weiterhin ist im Ausgangsstromkreis 8 ein Strompfad 42 mit einem in Widerstand 44 und einem ebenfalls als MOSFET ausgebildeten Schalter 46 vorgesehen, der parallel zu den Ausgangstreibern 22 und den Ausgängen 4 angeordnet ist und diese bei niederohmigem Zustand des Schalters 46 überbrückt. Der Schalter 46 wird ebenfalls von der Steuereinheit 2 angesteuert. Der Strompfad 42 ermöglicht ein Testen der Schalter 28, 30, 32, 34 auch dann, wenn kein Aktor 6 zugeschaltet ist.

Zusätzlich prüft das Auswertesystem mittels nicht näher dargestellter Spannungsmesseinrichtungen an jedem der Ausgänge 4 die anliegenden Potentiale. Damit können Querschlüsse von einzelnen Ausgangskreisen untereinander erkannt werden und es wird, wiederum mittels entsprechend hinterlegter Bedingungen, bei Erkennen eines Querschlusses eine sicherheitsgerichtete Abschaltung der Schalter 28, 30, 32, 34 und oder alternativ der Ausgangstreiber 22 vorgenommen.

Zur weiteren Erhöhung der Sicherheit ist die Steuereinheit 2 mit dem integrierten Auswertesystem in der Lage, typische Betriebswerte für die Stromstärken I1, I2 und I3 anzulernen. Hierzu werden die Aktoren 6 angeschlossen, von deren Gesamtwiderstand die Betriebsstromstärken I1, I2, I3 abhängen. Anschließend werden die Schalter 28, 30, 32, 34 und der dem jeweiligen Aktor zugeordnete Ausgangstreiber 22 geschlossen und die Stromstärken I1, I2, I3 gemessen. Zu jeder Stromstärke I1, I2, I3 werden obere und untere Grenzwerte ermittelt, z.B. plus oder minus zehn Prozent. Im laufenden Betrieb werden die Stromstärken I1, I2, I3 bezüglich der jeweils eingeschalteten Aktoren 6 geprüft. Damit werden ebenso Querschlüsse von Ausgangskreisen untereinander erkannt.

Zusätzlich ist die Steuereinheit 2 mit dem integrierten Auswertesystem in der Lage, typische Betriebswerte für die Stromstärken der einzelnen Verbraucher anzulernen. Hierzu werden die Aktoren 6 angeschlossen, und nacheinander der dem jeweiligen Aktor 6 zugeordnete Ausgangstreiber 22 geschlossen und die einzelnen jeweils ermittelten Stromstärken gemessen. Tritt nun im laufenden Betrieb ein Abfall der Stromstärke I3 und I1+I2 auf, und entspricht dieser Abfall einem der angelernten Werte für die Aktoren 6, lässt dies auf eine Unterbrechung des Stromkreises des dem Wert entsprechenden Aktors 6 schließen, es könnte also eine Fehlfunktion vorliegen. Beispielsweise könnten die vier Aktoren 6 jeweils Stromaufnahmen von 1, 2, 4 und 8 A haben. Fällt die Stromstärke I3 und I1+I2 um 4 A ab, lässt dies auf eine Fehlfunktion des dritten Aktors 6 schließen. Dadurch wird eine wertvolle Diagnoseinformation durch die Sicherheitssteuerung 1 ermittelt.

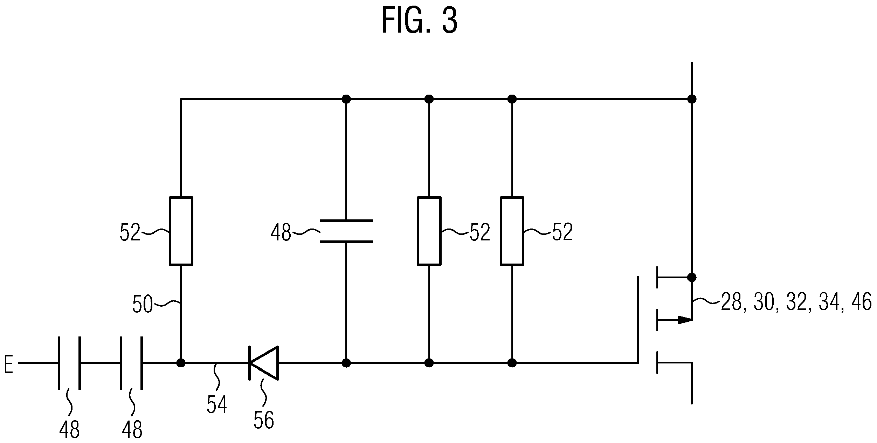

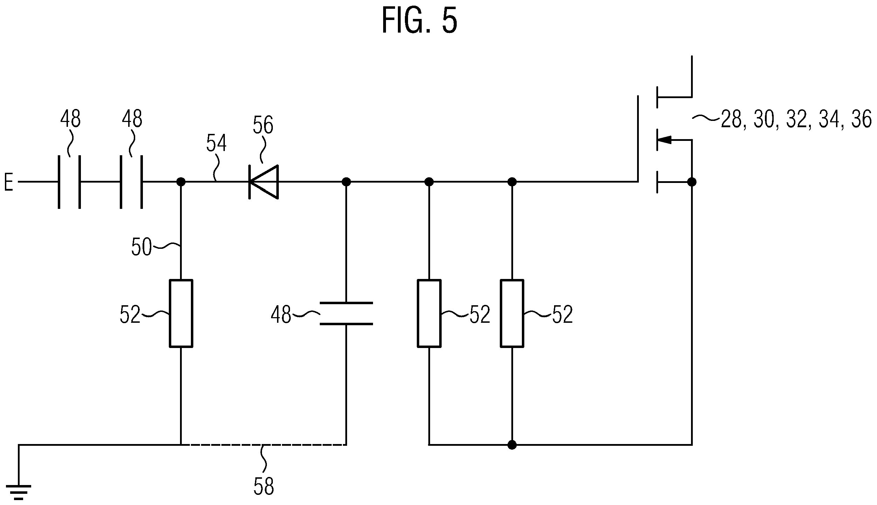

Zur noch weiteren Erhöhung der Sicherheit ist die Ansteuerung der Schalter 28, 30, 32, 34 und optional auch 46 monostabil ausgelegt. D.h. der MOSFET wird von einer Schaltung angesteuert, mittels der er sich stabil nur im hochohmigen Zustand befindet, während zum Erhalt des niederohmigen Zustands eine von der Steuereinheit 2 erzeugte Taktung erforderlich ist. Die Schaltung für die Ansteuerung jedes der Schalter 28, 30, 32, 34 ist zwecks besserer Übersichtlichkeit in FIG 3 dargestellt. Der Schalter 46 kann direkt von der Steuereinheit 2 oder optional von der in FIG 5 dargestellten Schaltung gesteuert werden.

Die Schaltung gemäß FIG 3 zeigt einen Eingang E, an dem ein getaktetes Signal anliegen muss, damit der jeweilige Schalter 28, 30, 32, 34 in den niederohmigen Zustand geht. Hierfür weist die Zuleitung vom Eingang E ausgehend zwei Kondensatoren 48 auf, anschließend einen Abzweig zu einem abzweigenden Strompfad 50, der über einen Widerstand 52 zur Drain-Seite des als MOSFET ausgebildeten Schalters 28, 30, 32, 34 führt. Der andere Strompfad 54 am Abzweig führt über eine Diode 56 in Durchlassrichtung zur Gate-Seite des Schalters 28, 30, 32, 34. Die Strompfade 50, 54 sind zwischen Widerstand 52 und Drain-Seite bzw. Diode 56 und Gate-Seite noch über insgesamt drei Verbindungen gekoppelt, aus Sicht des Eingangs E in der ersten Verbindung über einen Kondensator 48, in der zweiten und dritten Verbindung über je einen Widerstand 52.

Entfällt bei der in FIG 3 gezeigten Schaltung das Taktsignal am Eingang durch einen Querschluss oder einen Stuck-at-Fehler auf der Zuleitung, geht der Schalter 28, 30, 32, 34 automatisch in den hochohmigen Zustand. Die Kondensatoren 48 sowie die Widerstände 52 können, wie in FIG 3 und 5 dargestellt, redundant ausgelegt sein.

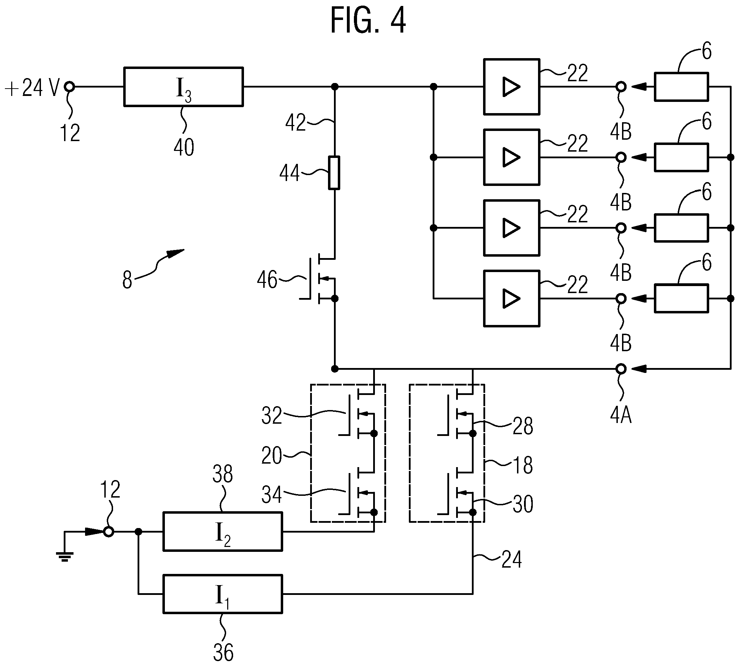

Dieselbe Funktionalität wie in der High-Side-Schaltung nach FIG 2 und 3 lässt sich auch über eine Low-Side-Schaltung erzielen, wie dies im Ausführungsbeispiel nach FIG 4 und 5 gezeigt ist. Die FIG 4 und 5 werden nur anhand ihrer Unterschiede zu FIG 2 bzw. 3 beschrieben.

FIG 4 zeigt den Ausgangsstromkreis, bei dem die Schalter 28, 30, 32, 34 nicht den Ausgängen 4B bzw. den Ausgangstreibern 22 zugeordnet sind, sondern dem masseseitigen Ausgang 4A. Dementsprechend sind die Strompfade 24, 26 mit den entsprechenden Bauteilen masseseitig angeordnet, wobei Drain- und Source-Seite der Schalter 28, 30, 32, 34 entsprechend vertauscht wurden. Im Übrigen ist die Funktionalität identisch zur FIG 2.

FIG 5 zeigt die für die Low-Side-Schaltung entsprechend veränderte Ansteuerung der Schalter 28, 30, 32, 34 und optional 46. Hierbei ist die Diode 56 in umgekehrter Richtung, also ebenfalls in Durchlassrichtung, angeordnet, und der ausgehend vom Strompfad 54 an den Widerstand 50 anschließende Teil des Strompfades 50 ist mit Masse verbunden. Der in FIG 5 gezeigte Bereich 58 umfasst somit die Strommesseinrichtungen 36 und 38 und für die Schalter 28 und 32 auch noch die Source-Drain-Strecken der Schalter 30 und 34.

Bezugszeichenliste

| | |
|---|---|
| 1 | Sicherheitssteuerung |
| 2 | Steuereinheit |
| 4A, 4B | Ausgang |
| 6 | Aktor |
| 8 | Ausgangsstromkreis |
| 10 | Strompfad |
| 12 | Versorgungsanschluss |
| 14 | Schalteingänge |
| 16 | Schaltausgänge |
| 18, 20 | sicheres Schaltelement |
| 22 | Ausgangstreiber |
| 24, 26 | Strompfad |
| 28, 30, 32, 34 36, 38, | Schalter |
| 40 | Strommesseinrichtung |
| 42 | Strompfad |
| 44 | Widerstand |
| 46 | Schalter |
| 48 | Kondensator |
| 50 | Strompfad |
| 52 | Widerstand |
| 54 | Strompfad |
| 56 | Diode |
| 58 | Bereich |
| E | Eingang |
| I1, I2 | |
| I3 | Stromstärke |

**Patentansprüche**

1. Sicherheitssteuerung (1), ausgelegt zum gemäß einer Sicherheitsvorschrift sicheren Ein- und Ausschalten eines elektrischen Verbrauchers, umfassend ein sicheres Schaltelement (18, 20) sowie einen ersten und einen zweiten Ausgang (4A, 4B), an die der elektrische Verbraucher unter Bildung eines mittels des Schaltelements (18, 20) sicher schaltbaren Versorgungsstromkreises für den elektrischen Verbraucher anschließbar ist, und ein Auswertesystem zur Prüfung des Versorgungsstromkreises auf Querschlüsse, durch die die Stromversorgung des Verbrauchers trotz Abschalten über den Querschluss aufrecht erhalten wird, **gekennzeichnet dadurch, dass** das Auswertesystem eine erste, dem ersten Ausgang (4A) zugeordnete Strommesseinrichtung (40) und eine zweite, dem zweiten Ausgang (4B) zugeordnete Strommesseinrichtung (36, 38) umfasst und dass in dem Auswertesystem eine die in den Strommesseinrichtungen (36, 38, 40) gemessenen Stromstärken (I1, I2, I3) verknüpfende Bedingung für die Erkennung eines durch einen Querschluss erzeugten Stromflusses, der von dem Stromkreis zu- oder wegfließt, hinterlegt ist.

2. Sicherheitssteuerung (1) nach Anspruch 1, bei der das sichere Schaltelement (18, 20) in dem zu demjenigen Ausgang (4B) führenden Schaltkreis angeordnet ist, der einem höheren Potential zugeordnet ist als der jeweils andere Ausgang (4A).

3. Sicherheitssteuerung (1) nach Anspruch 1, bei der das sichere Schaltelement (18, 20) in dem zu demjenigen Ausgang (4A) führenden Schaltkreis angeordnet ist, der einem niedrigeren Potential zugeordnet ist als der jeweils andere Ausgang (4B).

4. Sicherheitssteuerung (1) nach einem der vorhergehenden Ansprüche, bei der dem ersten Strompfad (24) mit dem sicheren Schaltelement (18) ein zweiter Strompfad (26) mit einem zweiten sicheren Schaltelement (20) parallel geschaltet ist, wobei das Auswertesystem für jeden der beiden Strompfade (24, 26) eine dem jeweiligen Strompfad (24, 26) zugeordnete Strommesseinrichtung (36, 38) aufweist.

5. Sicherheitssteuerung (1) nach Anspruch 4, die einen Strompfad (42) mit einem Schalter (46) aufweist, der den ersten und den zweiten Ausgang (4A, 4B) verbindet.

6. Sicherheitssteuerung (1) nach einem der vorhergehenden Ansprüche, bei der die jeweilige Strommesseinrichtung (36, 38, 40) ein Hall-Element umfasst.

7. Sicherheitssteuerung (1) nach einem der vorhergehenden Ansprüche, bei der die jeweilige Strommesseinrichtung (36, 38, 40) einen Shunt-Widerstand mit einem Spannungsverstärker umfasst.

8. Sicherheitssteuerung (1) nach einem der vorhergehenden Ansprüche, bei der das jeweilige sichere Schaltelement (28, 30, 32, 34) monostabil ausgelegt ist.

9. Sicherheitssteuerung (1) nach einem der vorhergehenden Ansprüche, bei der den Ausgängen (4A, 4B) jeweils eine Spannungsmesseinrichtung zugeordnet ist.

10. Verfahren zum Prüfen eines Versorgungsstromkreises auf Querschlüsse, durch die die Stromversorgung des Verbrauchers trotz Abschalten über den Querschluss aufrecht erhalten wird, in einer Sicherheitssteuerung (1), ausgelegt zum gemäß einer Sicherheitsvorschrift sicheren Ein- und Ausschalten eines elektrischen Verbrauchers, umfassend ein sicheres Schaltelement (18, 20) sowie einen ersten und einen zweiten Ausgang (4A, 4B), an die der elektrische Verbraucher unter Bildung des mittels des Schaltelements (18, 20) sicher schaltbaren Versorgungsstromkreises für den elektrischen Verbraucher anschließbar ist, **dadurch gekennzeichnet, dass**
ein Auswertesystem die am ersten Ausgang (4A) fließende Stromstärke (I3) und die am zweiten Ausgang (4B) fließende Stromstärke (I1, I2) misst und anhand einer die gemessenen Stromstärken (I1, I2, I3) verknüpfenden Bedingung ein durch einen Querschluss erzeugter Stromfluss, der von dem Stromkreis zu- oder wegfließt, erkannt wird.

11. Verfahren nach Anspruch 10, bei dem in der Sicherheitssteuerung (1) dem ersten Strompfad (24) mit dem sicheren Schaltelement (18) ein zweiter Strompfad (26) mit einem zweiten sicheren Schaltelement (20) parallel geschaltet ist, wobei das Auswertesystem die am ersten Ausgang (4B) fließende Stromstärke (I1, I2) oder die am zweiten Ausgang (4A) fließende Stromstärke (I3) sowie die im ersten Strompfad (18) und die im zweiten Strompfad (20) fließende Stromstärke (I1, I2) misst und anhand einer die gemessenen Strömstärken (I1, I2, I3) verknüpfenden Bedingung eine Fehlfunktion eines der sicheren Schaltelemente (18, 20) erkannt wird.

12. Verfahren nach Anspruch 10 oder 11, bei dem der erste und der zweite Ausgang (4A, 4B) über einen Strompfad (42) in der Sicherheitssteuerung (1) verbunden werden, wenn der Versorgungsstromkreis für den elektrischen Verbraucher an den Ausgängen (4A, 4B) nicht geschlossen ist.

13. Verfahren nach einem der Ansprüche 10 bis 12, bei dem das Auswertesystem die an den Ausgängen (4A, 4B) jeweils anliegenden Spannungen misst und anhand einer die gemessenen Spannungen verknüpfenden Bedingung ein Querschluss erkannt wird.

14. Verfahren nach einem der Ansprüche 10 bis 13, bei dem anhand einer die gemessenen Stromstärken (I1, I2, I3) mit vorab ermittelten typischen Betriebswerten für die Stromstärken verknüpfenden Bedingung ein Querschluss erkannt wird.

15. Verfahren nach einem der Ansprüche 10 bis 14, bei dem anhand einer die gemessenen Stromstärken (I1, I2, I3) mit vorab ermittelten typischen Betriebswerten für die Stromstärken jedes der angeschlossenen elektrischen Verbraucher verknüpfenden Bedingung eine Fehlfunktion eines elektrischen Verbrauchers erkannt wird.

**Claims**

1. A safety controller (1) designed to safely switch an electrical load on and off in accordance with a safety regulation, comprising a safe switching element (18, 20) and a first and a second output (4A, 4B) to which the electrical load can be connected to form a supply circuit for the electrical load which can be safely switched by means of the switching element (18, 20), and

an evaluation system for testing the supply circuit for cross shorts, by means of which the power supply to the load is maintained via the cross shorts despite switching off, **characterized in that** the evaluation system comprises a first current measuring device (40) assigned to the first output (4A) and a second current measuring device (36, 38) assigned to the second output (4B), and **in that** a condition linking the current intensities (I1, I2, I3) measured in the current measuring devices (36, 38, 40) is stored in the evaluation system for detecting a current flow generated by a cross circuit which flows to or away from the circuit.

2. The safety controller (1) according to claim 1, in which the safe switching element (18, 20) is arranged in the circuit leading to that output (4B) which is assigned to a higher potential than the respective other output (4A).

3. The safety controller (1) according to claim 1, in which the safe switching element (18, 20) is arranged in the circuit leading to that output (4A) which is assigned to a lower potential than the respective other output (4B).

4. The safety controller (1) according to one of the preceding claims, in which a second current path (26) with a second safe switching element (20) is connected in parallel to the first current path (24) with the safe switching element (18), wherein the evaluation system has for each of the two current paths (24, 26) a current measuring device (36, 38) assigned to the respective current path (24, 26).

5. The safety controller (1) according to claim 4 having a current path (42) with a switch (46) connecting the first and second outputs (4A, 4B).

6. The safety controller (1) according to any of the preceding claims, in which the respective current measuring device (36, 38, 40) comprises a Hall element.

7. The safety controller (1) according to any of the preceding claims, in which the respective current measuring device (36, 38, 40) comprises a shunt resistor with a voltage amplifier.

8. The safety controller (1) according to any of the preceding claims, in which the respective safe switching element (28, 30, 32, 34) is designed to be monostable.

9. The safety controller (1) according to one of the preceding claims, in which the outputs (4A, 4B) are respectively assigned a voltage measuring device.

10. A method for testing a supply circuit for cross circuits by which the power supply to the load is maintained via the cross circuit despite switching off, in a safety controller (1) designed to safely switch an electrical load on and off in accordance with a safety regulation, comprising a safe switching element (18, 20) and a first and a second output (4A, 4B), to which the electrical load can be connected to form the supply circuit for the electrical load which can be safely switched by means of the switching element (18, 20), **characterized in that** an evaluation system measures the current intensity (13) flowing at the first output (4A) and the current intensity (I1, I2) flowing at the second output (4B) and a current flow generated by a cross circuit which flows in or out of the circuit is detected by means of a condition linking the measured current intensities (I1, I2, I3).

11. The method according to claim 10, in which a second current path (26) with a second safe switching element (20) is connected in parallel to the first current path (24) with the safe switching element (18) in the safety controller (1), wherein the evaluation system determines the current intensity (I1, I2) flowing at the first output (4B), or the current intensity (13) flowing at the second output (4A) and the current intensity (I1, I2) flowing in the first current path (18) and in the second current path (20), and a malfunction of one of the safe switching elements (18, 20) is detected by means of a condition linking the measured current intensities (I1, I2, I3).

12. The method according to claim 10 or 11, in which the first and second outputs (4A, 4B) are connected via a current path (42) in the safety controller (1) if the supply circuit for the electrical load is not closed at the outputs (4A, 4B).

13. The method according to any of claims 10 to 12, in which the evaluation system measures the voltages respectively present at the outputs (4A, 4B) and a cross circuit is detected by means of a condition linking the measured voltages.

14. The method according to any of claims 10 to 13, in which a cross circuit is detected by means of a condition linking the measured current intensities (I1, I2, 13) with typical operating values for the current intensities determined in advance.

15. The method according to any of claims 10 to 14, in which a malfunction of an electrical load is detected by means of a condition combining the measured current intensities (I1, I2, I3) with typical operating values determined in advance for the current intensities of each of the connected electrical loads.

**Revendications**

1. Une commande de sécurité (1), destinée à une mise sous tension et hors tension sécurisée d'une charge électrique conformément à une réglementation de sécurité, comprenant un élément de commutation de sécurité (18, 20) et une première et une seconde sorties (4A, 4B) auxquelles peut être raccordée la charge électrique pour constituer un circuit d'alimentation pour la charge électrique pouvant être commutée de manière sécurisée au moyen de l'élément de commutation (18, 20), et

   un système d'évaluation pour tester des circuits transversaux au sein du circuit d'alimentation, au moyen duquel l'alimentation électrique à la charge est maintenue via des circuits transversaux malgré la mise hors tension, **caractérisé en ce que**
   le système d'évaluation comporte un premier dispositif de mesure de courant (40) attribué à la première sortie (4A) et un second dispositif de mesure de courant (36, 38) attribué à la seconde sortie (4B), et **en ce qu'**une condition de liaison entre les intensités de courant (I1, I2, I3) mesurées dans les dispositifs de mesure de courant (36, 38, 40) est stockée dans le système d'évaluation pour détecter un flux de courant généré par un circuit transversal et s'écoulant vers ou hors du circuit.

2. La commande de sécurité (1) selon la revendication 1, dans laquelle l'élément de commutation de sécurité (18, 20) est disposé dans le circuit menant à la sortie (4B), qui est associée à un potentiel supérieur à l'autre sortie respective (4A).

3. La commande de sécurité (1) selon la revendication 1, dans laquelle l'élément de commutation de sécurité (18, 20) est disposé dans le circuit menant à la sortie (4A) associée à un potentiel inférieur à l'autre sortie respective (4B).

4. La commande de sécurité (1) selon l'une des revendications précédentes, dans laquelle un second chemin de courant (26) doté d'un second élément de commutation sécurisé (20) est connecté en parallèle au premier chemin de courant (24) doté de l'élément de commutation sécurisé (18), dans lequel le système d'évaluation comporte, pour chacun des deux chemins de courant (24, 26), un dispositif de mesure de courant (36, 387) attribué au chemin de courant respectif (24, 26).

5. La commande de sécurité (1) selon la revendication 4, comprenant un chemin de courant (42) ayant un commutateur (46) reliant les première et seconde sorties (4A, 4B).

6. La commande de sécurité (1) selon l'une des revendications précédentes, dans laquelle le dispositif de mesure de courant respectif (36, 38, 40) comprend un élément de type Hall.

7. La commande de sécurité (1) selon l'une des revendications précédentes, dans laquelle le dispositif de mesure de courant respectif (36, 38, 40) comprend une résistance de dérivation avec un amplificateur de tension.

8. La commande de sécurité (1) selon l'une des revendications précédentes, dans laquelle l'élément de commutation de sécurité respectif (28, 30, 32, 34) est conçu pour être monostable.

9. La commande de sécurité (1) selon l'une des revendications précédentes, dans laquelle les sorties (4A, 4B) sont respectivement affectées chacune à un dispositif de mesure de tension.

10. Un procédé pour tester un circuit d'alimentation pour des circuits transversaux au moyen duquel l'alimentation électrique de la charge est maintenue via le circuit transversal malgré l'extinction, au sein d'un contrôleur de sécurité (1) conçu pour commuter de manière sécurisée une charge électrique mise sous et hors tension selon une réglementation de sécurité, comprenant un élément de commutation de sécurité (18, 20) et une première et seconde sortie (4A, 4B), auxquelles la charge électrique peut être raccordée de manière à constituer l'alimentation électrique de la charge électrique pouvant être commutée de manière sécurisée au moyen de l'élément de commutation (18, 20), **caractérisé en ce qu'**un système d'évaluation mesure l'intensité du courant (I3) s'écoulant à la première sortie (R1) et l'intensité du courant (I1, I2) s'écoulant à la seconde sortie (4B) et un flux de courant généré par un circuit transversal s'écoulant vers ou hors du circuit est détecté au moyen d'une condition de liaison entre les intensités de courant mesurées (I1, I2, I3).

11. Le procédé selon la revendication 10, dans lequel un second chemin de courant (26) doté d'un second élément de commutation sécurisé (20) est connecté en parallèle au premier chemin de courant (24) ayant l'élément de commutation de sécurité (18) dans le contrôleur de sécurité (1), dans lequel le système d'évaluation détermine l'intensité du courant (I1, I2) s'écoulant à la première sortie (4B), ou l'intensité du courant (I3) s'écoulant à la seconde sortie (4B) et l'intensité de courant (I1, I2) s'écoulant dans le premier chemin de courant (18) et dans le second chemin de courant (20), et un dysfonctionnement de l'un des éléments de commutation sécurisé (18, 20) est détecté au moyen d'une condition de liaison entre les intensités de courant mesurées (I1, I2, I3).

**12.** Le procédé selon la revendication 10 ou 11, dans lequel les première et seconde sorties (4A, 4B) sont connectées via un chemin de courant (42) dans le contrôleur de sécurité (1) lorsque le circuit d'alimentation de la charge électrique n'est pas fermé au niveau des sorties (4A, 4B).

**13.** Le procédé selon l'une des revendications 10 à 12, dans lequel le système d'évaluation mesure les tensions respectivement présentes aux sorties (4A, 4B) et on détecte un court-circuit sur la base d'une condition reliant les tensions mesurées.

**14.** Le procédé selon l'une des revendications 10 à 13, dans lequel un court circuit est détecté au moyen d'une condition de liaison entre les intensités de courant mesurées (I1, I2, I3) avec des valeurs de fonctionnement typiques pour des intensités de courant prédéterminées.

**15.** Le procédé selon l'une des revendications 10 à 14, dans lequel un dysfonctionnement d'une charge électrique est détecté sur la base d'une condition qui associe les intensités de courant mesurées (I1, I2, I3) avec des valeurs de fonctionnement typiques prédéterminées pour les intensités de courant de chacune des charges électriques connectées.

# FIG. 1

FIG. 2

EP 2 876 509 B1

## FIG. 3

FIG. 4

EP 2 876 509 B1

FIG. 5

EP 2 876 509 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011117615 A1
- DE 19962497 A1